# EUROPÄISCHE PATENTSCHRIFT

(11) **EP 0 378 114 B1**
(45) Veröffentlichungstag und Bekanntmachung des Hinweises auf die Patenterteilung: **29.03.1995**
(21) Anmeldenummer: 90100169.3
(22) Anmeldetag: 04.01.1990
(51) Int. Cl.: H04Q 11/04, H04Q 3/545

(54) **Anordnung zur Bildung einer PCM-Leitungsstruktur in einem digitalen Kommunikationssystem**
Arrangement for forming a PCM line structure in a digital communication system
Dispositif pour former une structure de ligne MIC dans un système de communication numérique

(30) Priorität: 13.01.1989 DE 3900902
(43) Veröffentlichungstag der Anmeldung: 18.07.1990
(73) Patentinhaber: SIEMENS AKTIENGESELLSCHAFT, 80333 München (DE)
(72) Erfinder: Masanow, Michael, D-8000 München 71 (DE); Niessner, Gerhard, D-8031 Gröbenzell (DE)

(56) Entgegenhaltungen:
- INTERNATIONAL SWITCHING SYMPOSIUM, SESSION 22B, PAPER 4. 7. Mai 1984, FLORENCE,IT Seiten 1 - 7; KADERALI ET AL.: 'Characteristics of a Digital Exchange for ISDN'
- HASLER MITTEILLUNGEN. Bd. 45, Nr. 1/2, Juni 1986, BERN CH Seiten 12 - 22; ALTHAUS ET AL.: 'AXE 10 - Aufbau und Funktion des digitalen Vermittlungssystems für die Schweiz'
- NTZ NACHRICHTENTECHNISCHE ZEITSCHRIFT. Bd. 41, Nr. 1, Januar 1988, BERLIN DE Seiten 30 - 32; PARIANI: 'Signalprozessor für digitale Vermittlungsanlagen'

## Beschreibung

Die Erfindung betrifft eine Anordnung zur Bildung einer PCM-Leitungsstruktur in einem eine verhältnismäßig geringe Anzahl von Anschlußmöglichkeiten aufweisenden digitalen Kommunikationssystem mit einer zentralen Steuereinheit und mit mehreren peripheren Steuereinheiten, die jeweils u. a. durch eine Prozessorbaugruppe und ein damit korrespondierendes Schnittstellenmodul gebildet sind, wobei dieses Schnittstellenmodul jeweils neben einer seriellen, dem Meldungsaustausch mit den übrigen Schnittstellenmodulen dienenden Meldungsschnittstelle eine für eine bestimmte Anzahl von teilnehmer- bzw. leitungsbezogenen Peripherieeinheiten vorgesehene Anschlußschnittstelle und mindestens eine weitere Schnittstelle aufweist, über die PCM-Daten an einen ersten und einen zweiten PCM-strukturierten Leitungsanschluß abgegeben werden, wobei diese PCM-Daten an den gleichartigen Schnittstellen der den übrigen Steuereinheiten zugeordneten Schnittstellenmodule über eine Leitungsverbindung zur Verfügung gestellt werden.

Das zugrundegelegte digitale Kommunikationssystem, z. B. ein Nebenstellenkommunikationssystem mit im Gesamtausbau geringer Anzahl von Anschlüssen, ist in Funktionsbereiche gegliedert, wobei Schnittstellenmodule zwischen diesen einzelnen Funktionsbereichen vorhanden sind. Neben der zentralen Steuereinheit sind in Abhängigkeit von der Ausbaustufe mehrere periphere Steuereinheiten vorhanden. Jede dieser Steuereinheiten steht mit einer bestimmten Anzahl von peripheren Anschlußbaugruppen für Teilnehmeranschlüsse bzw. teilnehmerorientierte Geräteanschlüsse bzw. mit Leitungsanschlußbaugruppen für analoge oder digitale Leitungen, über die unterschiedliche Verkehrsarten abgewickelt werden, in Verbindung.

Jede periphere Steuereinheit weist neben einer Mikroprozessorsteuerung ein Schnittstellenmodul auf, über das u. a. die von den erwähnten Anschlußbaugruppen über eine entsprechende Leitung übermittelten Nutzdaten, insbesondere die Sprachsignale, auf wenigstens zwei Leitungsanschlußstellen gegeben werden. Die an diesen einzelnen Highway-Anschlußstellen auftretenden Informationen werden auch an die übrigen Steuereinheiten abgegeben.

Es ist nun die Aufgabe der Erfindung, die PCM-strukturierten Verbindungsleitungen (Highways) so anzuordnen, daß die Forderungen hinsichtlich der Kommunikationsmöglichkeiten, insbesondere bei einer möglichen Änderung der Anschlußwerte optimal erfüllt werden und eine solche Änderung in einfacher Weise zu ermöglichen.

Dies wird dadurch erreicht, daß die peripheren Steuereinheiten gruppenweise zusammengefaßt sind, daß die Empfangseingänge und die Sendeausgänge des ersten PCM-Leitungsanschlusses der Schnittstellenmodule aller insgesamt vorhandenen peripheren Steuereinheiten miteinander verbunden und über eine Leitungszuführung zur zentralen Steuereinheit geführt sind, daß die Empfangseingänge und die Sendeausgänge des zweiten PCM-Leitungsanschlusses der Schnittstellenmodule der Steuereinheiten einer jeden Gruppe jeweils ausschließlich untereinander verbunden sind und über jeweils eine gruppenspezifische Leitungszuführung zur zentralen Steuereinheit geführt sind, daß die Leitungszuführungen mit den ihnen entsprechenden ersten bzw. zweiten PCM-Nutzdatenanschlüssen des Schnittstellenmoduls der zentralen Steuereinheit verbindbar, bzw. die Zeitkanäle koppelbar sind.

Durch die gruppenweise Zusammenfassung der PCM-Anschlußstellen und das Vorsehen einer Highway-Leitung für eine solche Gruppe von peripheren Steuereinheiten kann bei einer mit der Anzahl dieser Steuereinheiten wachsenden Anzahl von Teilnehmern bzw. von Anschlußleitungen eine ausreichende Anzahl von Zeitschlitzen zur Verfügung gestellt werden. Gleichzeitig wird durch die Zusammenfassung der Highways eine Reduzierung der einen hochfrequenten Informationsfluß führenden PCM-Leitungen auf der 'backplane' erreicht, wodurch die Störungsmöglichkeiten reduziert werden. Durch die Zusammenfassung der jeweils ersten PCM-Leitungsanschlüsse aller eingesetzten peripheren Steuereinheiten kann ohne den Einsatz eines digitalen Koppelfeldbausteines für die insgesamt angeschlossenen Teilnehmergeräte die Möglichkeit der Konferenzbildung ,in einfacher Weise vorgesehen werden. Hierzu wird lediglich an die betreffenden Leitungszuführungen ein Konferenzbaustein zu den peripheren Steuereinheiten und dieser zentralen Steuereinheit parallel geschaltet. Über diesen alle Steuereinheiten verbindenden Highway können also dann neben normalen Verbindungen auch Konferenzverbindungen, bei denen also von einem Teilnehmer eine Verbindung zwischen einem zweiten und mindestens einem dritten Teilnehmer hergestellt wird, vermittelt werden.

Die Verbindung der in der erfindungsgemäßen Weise vorgesehenen Highway-Leitungen mit den entsprechenden Anschlüssen der zentralen Steuereinheit und mit dem dieser zentralen Steuereinheit zugehörigen Konferenzbaustein erfolgt gemäß einer Weiterbildung der Erfindung durch eine steckbare Verbindungseinheit. Dadurch wird es in einfacher Weise möglich, bei einer Ausbaugröße des Vermittlungssystems, die einen digitalen Koppelfeldbaustein erforderlich macht, einen solchen Baustein ohne besonderer Beschaltungsänderungen einzusetzen. Die hierfür notwendigen Anschlüsse können grundsätzlich vorab in der Weise vorgesehen sein, daß mit dem Entfernen der steckbaren Verbindungseinheit und dem Einbringen dieses Bausteines dieser an die gebildeten Highways sowie an den Konferenzbaustein wirksam angeschlossen ist.

Es ist gemäß einer Weiterbildung der Erfindung vorgesehen, daß die insgesamt für den vorgesehenen Vollausbau erfindungsgemäß gebildeten Highway-Leitungen generell auf der Rückwandverdrahtung ('backplane') vorgesehen sind, so daß bei einer Änderung der Ausbaugröße durch Hinzunahme oder Wegnahme von peripheren Steuereinheiten dies in einfachster Weise durch das Stecken entsprechender Einheiten ohne Änderungen in den Leitungsführungen bewirkt werden kann.

Die Erfindung wird in einem Ausführungsbeispiel näher erläutert, in dem lediglich die wesentlichen, zum Verständnis der Erfindung notwendigen Schalt- und Steuereinrichtungen als Blockschaltbild dargestellt sind. Die zentrale Steuereinheit CCU eines Kommunikationssystems, das beispielsweise eine Nebenstellenanlage darstellt, koordiniert die Steuerung sämtlicher in diesem Kommunikationssystem vorhandener Einrichtungen über entsprechende Verbindungen. Dies betrifft z. B. den über HDLC-Standardschnittstellen HS und die entsprechenden Verbindungsleitungen erfolgenden Meldungsaustausch zwischen dieser zentralen Einheit und den peripheren Steuereinheiten PCU. In gleicher Weise wie die zentrale Steuereinheit weist, wie dies lediglich für die Steuereinheit PCU1 dargestellt ist, jede periphere Steuereinheit PCU u. a. eine Mikroprozessorbaugruppe MP und ein Schnittstellenmodul PBC auf. Neben der erwähnten HDLC-Schnittstelle HS weist dieses Modul PBC eine Anschlußschnittstelle AS auf, für die über entsprechende Verbindungsleitungen SIP eine Verbindung zu Teilnehmeranschlußbaugruppen TE bzw. zu Leitungsanschlußbaugruppen AE besteht. Erstere sind über Teilnehmeranschlußleitungen TL mit Teilnehmergeräten verbunden. Die Leitungsanschlußbaugruppen AE sind mit Leitungen verbunden, über die, wie z. B. über die Amtsleitung AL Amtsverkehr oder über entsprechende Querverbindungsleitungen Querverkehr möglich ist. Jeder peripheren Steuereinheit PCU sind über eine entsprechende Anzahl von Leitungen SIP jeweils eine bestimmte maximale Anzahl, beispielsweise acht Anschlußbaugruppen, zugeordnet, die für digitale oder auch für analoge Sprachendgeräte zuständig sind. Über die Leitungen SIP verlaufen neben den Steuerinformationen demnach auch die digitalisierten Sprachinformationen. Diese werden mittels PCM-strukturierter Verbindungen über eine entsprechende Schnittstelle HWS kommend und gehend von jeder peripheren Steuereinheit an die übrigen Steuereinheiten gegeben. Dies erfolgt in kommender und gehender Richtung für jedes Schnittstellenmodul PBC, d. h. für jede Steuereinheit an jeweils zwei hierfür gebildeten Anschlußpunkten, nämlich ein erster Anschlußpunkt HW0 und ein zweiter Anschlußpunkt HW1. Diese Anschlußstellen, die die PCM-codierten Sprachinformationen in entsprechenden Zeitkanälen führen, werden in gleicher Weise für alle Steuereinheiten gebildet.

Es werden nun nicht, wie dies denkbar ist, alle Anschlußstellen in getrennten Leitungsführungen zu der zentralen Steuerbaugruppe CCU geführt, sondern es wird hierzu eine ganz bestimmte Leitungsstruktur gebildet. Zu diesem Zweck sind die peripheren Steuereinheiten gruppenweise zusammengefaßt. Im Ausführungsbeispiel werden insgesamt drei Gruppen gebildet, von denen jede Gruppe zwei periphere Steuereinheiten umfaßt. Zur ersten Gruppe gehören also die peripheren Steuereinheiten PCU1, PCU2, zu der zweiten Gruppe die peripheren Steuereinheiten PCU3 und PCU4 und zur dritten Gruppe die peripheren Steuereinheiten PCU5 und PCU6. Diese genannten Steuereinheiten sind beispielsweise für eine bestimmte Ausbaugröße erforderlich. Wird eine Ausbaustufe mit einer geänderten Anzahl von Teilnehmer- bzw. Verbindungsleitungen vorgesehen, so kann die Anzahl der peripheren Steuereinheiten beispielsweise gruppenweise verringert bzw. vergrößert werden.

Die ersten Anschlußpunkte HW0 für die PCM-strukturierten Verbindungen werden für alle peripheren Steuereinheiten sowohl für die kommende als auch die gehende Richtung zusammengefaßt und jeweils über eine Leitungszuführung RHW0 bzw. THW0 zu der zentralen Steuereinheit CCU geführt und dort in den Fällen, in denen aufgrund der gewählten Ausbaugröße des Kommunikationssystems kein digitaler Koppelfeldbaustein MTS vorzusehen ist, direkt mit den entsprechenden ersten Anschlußpunkten HW0 des der zentralen Steuereinheit zugehörigen Schnittstellenmoduls PBC verbunden. Über einen derartigen Highway wären also gleichzeitig beispielsweise maximal 32 Zeitkanäle belegbar. Diese Zeitkanäle sind auch für den Aufbau von Konferenzverbindungen nutzbar, da in der zentralen Steuereinheit CCU an die genannten Anschlußpunkte ein üblicher Konferenzbaustein Con angeschaltet ist, der in gleicher Weise wie das Anschlußmodul PBC und ein eingesetzter Koppelfeldbaustein MTS über entsprechende Busverbindungen durch die Mikroprozessorbaugruppe MP gesteuert wird. Für den Mikroprozessor besteht auch über eine solche Busverbindung der Zugriff zu einem Programmspeicher PS und zu einem Datenspeicher DS.

Die zentrale Steuerung wird also über den Highway HW0 mit allen peripheren Steuerungen PCU und mit dem Konferenzbaustein Con parallel geschaltet. Es sind also alle Eingänge und alle Ausgänge miteinander verbunden. Dadurch ist es möglich, auch ohne Einsatz eines Koppelfeldbausteines, der nur optional vorgesehen werden soll, über den gebildeten Highway HW0 in kommender und gehender Richtung von der Mikroprozessorbaugruppe MP über den Konferenzbaustein Con gesteuerte Konferenzverbindungen abzuwickeln.

Hinsichtlich der zweiten, für jede Steuereinheit vorhandenen Anschlußpunkte für die Sprachinformationen werden jeweils diejenigen Steuereinheiten, die eine Gruppe bilden, unmittelbar zusammengefaßt und jeweils vermittels einer Leitungszuführung für die Empfangs- bzw. Sendeseite zu der zentralen Steuerbaugruppe CCU über eine entsprechende Rückwandverdrahtung geführt. Werden - wie im Ausführungsbeispiel - drei Gruppen von peripheren Steuereinheiten PCU gebildet, so ergibt dies die empfangsseitigen Leitungen RHW10...RHW12 und die sendeseitigen Leitungen THW10...THW12. Unabhängig von der tatsächlichen Ausbaugröße werden diese Leitungen in jedem Fall auf der Rückwand verlegt, so daß ohne besondere Änderungen in der Verdrahtung unterschiedliche Baustufen vorgesehen werden können. Die einzelnen Highway-Leitungen werden in der zentralen Steuerbaugruppe an einzelne Anschlußpunkte geführt, die in den Fällen, in denen aufgrund der gewählten Ausbaustufe ein Koppelfeldbaustein MTS nicht erforderlich ist, durch schematisch angedeutete Steckverbinder V1...V11 untereinander und mit den entsprechenden Anschlußpunkten HW0 bzw. HW1 des Schnittstellenmoduls PBC der zentralen Steuerbaugruppe CCU verbunden werden. Die für jede Gruppe den Anschlußpunkten HW1 zugeordneten Highways sind also in einem solchen Falle in gleicher Weise wie die den Anschlußpunkten HW0 zugeordneten Highway-Verbindungen zusammengefaßt. Die jeweils zwei PCM-strukturierten Verbindungen werden durch einen in der Prozessorbaugruppe MP der zentralen Steuerbaugruppe CCU enthaltenen Mikroprozessor, der die ablaufenden Vorgänge koordiniert, verwaltet. Diese Zusammenfassung durch die Steckverbindungen V1...V11 ist nur für die Grundausbaustufe mit beispielsweise einer Gruppe von peripheren Steuereinheiten PCU1, PCU2 oder gegebenenfalls noch bei einer Ausbaustufe sinnvoll, die eine weitere Gruppe von peripheren Steuereinheiten PCU3, PCU4 umfaßt. Eine zusätzliche Erweiterung um eine oder gegebenenfalls mehrere Gruppen von peripheren Steuereinheiten erfordert dann zur Sicherstellung einer ausreichenden Erreichbarkeit der einzelnen Teilnehmerendgeräte einen digitalen Koppelfeldbaustein MTS. Durch die gewählte Struktur und die Anordnung der Anschlußpunkte für den Kurzschluß-Steckverbinder V1...V11 ist also der wahlweise Einsatz eines solchen Koppelfeldbausteins MTS ohne besondere Umstände möglich. Der Anschluß eines solchen Bausteines ist insoweit vorbereitet, als nach dem Entfernen der Steckverbindungen V1...V11 unmittelbar die Anschaltung der einzelnen Anschlußpfade des Koppelfeldbausteines MTS an die gebildeten Highways beim Einbringen des Koppelfeldbausteins MTS erfolgt. In gleicher Weise wird der die Sprachsignale von Konferenzgesprächen bewertende Konferenzbaustein Con an den Koppelfeldbaustein MTS angeschlossen. Es werden somit nach dem Entfernen der Steckverbindung V1...V11 die im Ausführungsbeispiel durch jeweils eine gestrichelte Linie angedeuteten Verbindungen wirksam. In kostengünstiger Weise läßt sich also bei Kleinanlagen ein solcher Koppelfeldbaustein einsparen, wobei dann die für den wahlweisen Einsatz vorgesehenen Anschlüsse durch eine einfache Steckverbindung überbrückt werden.

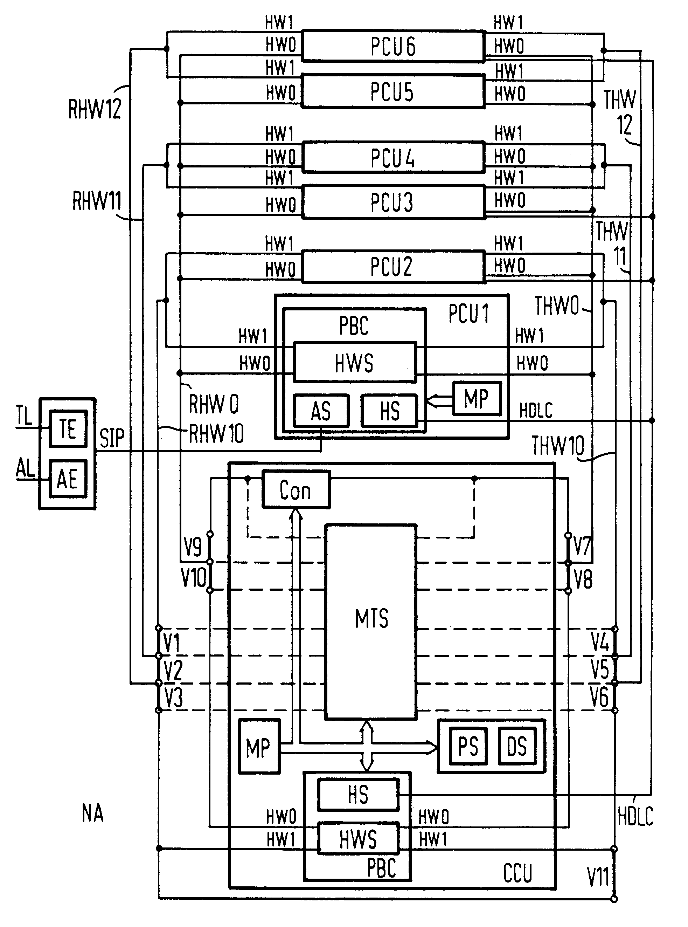

## Patentansprüche

1. Anordnung zur Bildung einer PCM-Leitungsstruktur in einem eine verhältnismäßig geringe Anzahl von Anschlußmöglichkeiten (TE, AE) aufweisenden digitalen Kommunikationssystem mit einer zentralen Steuereinheit (CCU) und mit mehreren peripheren Steuereinheiten (PCU1...PCU6), die jeweils unter anderem durch eine Mikroprozessorbaugruppe (MP) und ein damit korrespondierendes Schnittstellenmodul (PBC) gebildet sind, wobei dieses Schnittstellenmodul jeweils neben einer seriellen, dem Meldungsaustausch mit den übrigen Schnittstellenmodulen dienenden Meldungsschnittstelle (HS), eine für eine bestimmte Anzahl von teilnehmer- bzw. amtsleitungsbezogenen Peripherieeinheiten (TE, AE) vorgesehene Anschlußschnittstelle (AS) und mindestens eine weitere Schnittstelle (HWS) aufweist, über die PCM-Daten an einen ersten (HW0) und einem zweiten (HW1) PCM-strukturierten Leitungsanschluß abgegeben werden, wobei diese an den gleichartigen Schnittstellen der den übrigen Steuereinheiten zugeordneten Schnittstellenmodule über eine Leitungsverbindung zur Verfügung gestellt werden,
**dadurch gekennzeichnet**,
daß die peripheren Steuereinheiten (PCU1...PCU6) gruppenweise (PCU, PCU2; PCU3, PCU4; PCU5, PCU6) zusammengefaßt sind, daß die Empfangseingänge und die Sendeausgänge des ersten PCM-Leitungsanschlusses (HW0) der Schnittstellenmodule aller insgesamt vorhandenen peripheren Steuereinheiten (PCU1...PCU6) miteinander verbunden und über eine Leitungszuführung (RHW0, THW0) zur zentralen Steuereinheit (CCU) geführt sind, daß die Empfangseingänge und die Sendeausgänge des zweiten PCM-Leitungsanschlusses (HW1) der Schnittstellenmodule der Steuereinheiten einer jeden Gruppe (PCU1, PCU2) jeweils ausschließlich untereinander verbunden sind und über jeweils eine gruppenspezifische Leitungszuführung (RHW10...RHW12; THW10...THW12) zur zentralen Steuereinheit (CCU) geführt sind, daß die Leitungszuführungen mit den ihnen entsprechenden ersten bzw. zweiten PCM-Nutzdatenanschlüssen des Schnittstellenmoduls (PBC) der zentralen Steuereinheit (CCU) verbindbar bzw. die Zeitkanäle koppelbar sind.

2. Anordnung nach Anspruch 1,
**dadurch gekennzeichnet**,
daß parallel zu den ersten PCM-Nutzdatenanschlüssen (HW0) als Teileinheit der zentralen Steuereinheit ein die Durchführung von Konferenzverbindungen in einem PCM-System ermöglichender Konferenzbaustein (Con) angeschaltet ist.

3. Anordnung nach den Ansprüchen 1 und 2,
**dadurch gekennzeichnet**,
daß die Verbindung der den ersten PCM-strukturierten Leitungsanschlüssen (HW0) für alle peripheren Steuereinheiten (PCU1... PCU6) gemeinsam zugeordneten Leitungszuführung (RHW0, THW0) und die gruppenspezifischen Leitungszuführungen (RHW10...RHW12, THW10...THW12) sowohl kommend als auch gehend mit den ihnen jeweils entsprechenden ersten (HW0) bzw. zweiten (HW1) PCM-strukturierten Leitungsanschlüssen des Schnittstellenmoduls der zentralen Steuereinheit (CCU) bzw. mit den Anschlüssen des Konferenzbausteines (Con) unmittelbar durch eine steckbare Verbindungseinheit (V1...V11) vorgenommen wird.

4. Anordnung nach den Ansprüchen 1 bis 3,
**dadurch gekennzeichnet**,
daß bei Einsatz eines digitalen Koppelfeldbausteines (MTS) als Teileinheit der zentralen Steuereinheit (CCU) bei einer entsprechenden Anlagengröße sämtliche genannten Leitungszuführungen nach Entfernen der Steckverbindungen (V1...V11) unmittelbar für den Anschluß an die entsprechenden Ein- bzw. Ausgänge des Koppelfeldbausteines (MTS) in gleicher Weise wie die PCM-strukturierten Leitungsanschlüsse des der zentralen Steuereinheit (CCU) zugehörigen Schnittstellenmoduls und die Anschlüsse des Konferenzbausteines (Con) zur Verfügung stehen.

5. Anordnung nach Anspruch 1,
**dadurch gekennzeichnet**,
daß die Leitungszuführungen (RHW0, THW0; RHW10...RHW12, THW10 ...THW12) unabhängig von der jeweils vorliegenden tatsächlichen Ausbaugröße entsprechend dem maximal vorgesehenen Gesamtausbau generell vorhanden sind.

## Claims

1. Arrangement for forming a PCM line structure in a digital communications system which has a comparatively low number of interconnection options (TE, AE), having a central control unit (CCU) and having a plurality of peripheral control units (PCU1...PCU6) which are in each case inter alia formed by a microprocessor assembly (MP) and, corresponding therewith, an interface module (PBC), this interface module in each case having in addition to a serial message interface (HS), serving for message exchange with the other interface modules, an access interface (AS) provided for a specific number of subscriber line or exchange line peripheral units (TE, AE) and at least one further interface (HWS), by means of which the PCM data are output to a first (HW0) and a second (HW1) PCM structured line termination, these being made available via a line connection at the similar interfaces of the interface modules assigned to the other control units, characterized in that the peripheral control units (PCU1...PCU6) are combined in groups (PCU, PCU2; PCU3, PCU4; PCU5, PCU6), in that the receive inputs and the transmit outputs of the first PCM line connection (HW0) of the interface modules of all peripheral control units (PCU1...PCU6) present throughout are connected to one another and guided via a feeder line (RHW0, THW0) to the central control unit (CCU), in that the receive inputs and the transmit outputs of the second PCM line termination (HW1) of the interface modules of the control units of each group (PCU1, PCU2) are in each case connected exclusively to each other and guided via in each case a group-specific feeder line (RHW10...RHW12; THW10...THW12) to the central control unit (CCU), in that the feeder lines can be connected to the first and, respectively, second PCM user data connections, corresponding to the feeder lines, of the interface module (PBC) of the central control unit (CCU) and, respectively, the time slots can be coupled.

2. Arrangement according to Claim 1, characterized in that a conference module (Con) which permits conference connections to be carried out in a PCM system is connected as subunit of the central control unit parallel to the first PCM user data connections (HW0).

3. Arrangement according to Claims 1 and 2, characterized in that the feeder lines (RHWO, THW0) and the group-specific feeder lines (RHW10...RHW12, TWH10...THW12), jointly assigned to the first PCM-structured line terminations (HW0) for all peripheral control units (PCU1...PCU6) are directly connected both incoming and outgoing by a plug-in type connection unit (V1...V11) to the first (HW0) and, respectively, second (HW1) PCM-structured line terminations, in each case corresponding to the feeder lines, of the interface module of the central control unit (CCU) and, respectively, to the terminations of the conference module (Con).

4. Arrangement according to Claims 1 to 3, characterized in that when a digital switching-network component (MTS) is used as subunit of the central control unit (CCU) all mentioned feeder lines are available, after the plug connections (V1...V11) have been removed, directly for connection to the corresponding inputs and, respectively, outputs of the switching-network module (MTS) in the same manner as the PCM-structured line terminations of the interface module associated with the central control unit (CCU) and the connections of the conference module (Con), with corresponding dimensions of the array.

5. Arrangement according to Claim 1, characterized in that the feeder lines (RHW0, THW0; RHW10...RHW12, THW10...THW12) are generally present independently of the respectively present actual update level and corresponding to the envisaged maximum overall configuration.

## Revendications

1. Dispositif de formation d'une structure de ligne MIC dans un système de communication numérique comportant un nombre relativement petit de possibilités de raccordement (TE,AE) et comprenant une unité de commande centrale (CCU) et plusieurs unités de commande périphériques (PCU1 à PCU6), qui sont formées chacune entre autres d'un module de microprocesseur (MP) et d'un module d'interface (PBC), qui correspond à ce module, ce module d'interface ayant outre une interface de signalisation série (HS), servant à échanger des messages avec les autres modules d'interface, une interface de raccordement (AS) prévue pour un nombre déterminé d'unités périphériques d'abonnés ou d'unités (TE,AE) périphériques reliées à une ligne de raccordement au central ou aux abonnés, et au moins une autre interface (HWS), par l'intermédiaire de laquelle des données MIC sont envoyées à une première borne (HW0) et à une seconde borne (HW1) de ligne de structure MIC, ces bornes étant mises à la disposition, sur les interfaces de même type des modules d'interface associés aux autres unités de commande, par l'intermédiaire d'une jonction de ligne,
caractérisé par le fait
que les unités périphériques de commande (PCU1 à PCU6) sont réunies en groupes (PCU1 , PCU2; PCU3, PCU4; PCU5 , PCU6), que les entrées de réception et les sorties d'émission de la première connexion (HW0) de la ligne MIC des modules d'interface de toutes les unités périphériques de commande globalement présentes (PCU1 à PCU6) sont reliées entre elles et sont raccordées, par l'intermédiaire d'une arrivée de ligne (RHW0, THW0) à l'unité de commande centrale (CCU), que les entrées de réception et les sorties d'émission de la seconde connexion (HW1) de la ligne MIC des modules d'interface des unités de commande de chaque groupe (PCU1, PCU2) sont reliées entre elles exclusivement et sont raccordées par l'intermédiaire respectivement d'une arrivée de ligne (RHW10 à RHW12; THW10 à THW12), spécifique au groupe, à l'unité de commande centrale (CCU), que les arrivées de lignes peuvent être reliées aux premières ou aux secondes connexions de transmission de données utiles MIC, qui leur correspondent, du module d'interface (PBC) de l'unité de commande centrale (CCU) ou que les canaux temporels peuvent être accouplés.

2. Dispositif suivant la revendication 1, caractérisé par le fait qu'un module de conférence (Con), qui permet l'établissement de liaisons de conférence dans un système MIC, est branché en parallèle aux premières connexions (HW0) de transmission de données utiles MIC, en tant qu'unité partielle de l'unité de commande centrale.

3. Dispositif suivant l'une des revendications 1 et 2, caractérisé par le fait que la liaison de l'arrivée de ligne (RHW0, THW0), qui est associée en commun aux premières connexions de ligne (HW0) à structure MIC pour toutes les unités périphériques de commande (PCU1 à PCU6), et des arrivées de ligne (RHW10 à RHW12, THW10 à THW12), qui sont spécifiques aux groupes, s'effectue aussi bien dans le sens départ que dans le sens arrivée, avec les premières connexions (HW0) ou secondes connexions (HW1) de ligne à structure MIC, qui leur correspondent respectivement, du module d'interface de l'unité de commande centrale (CCU) ou avec les connexions du module de conférence (Con), directement par une unité de connexion enfichable (V1 à V11).

4. Dispositif suivant l'une des revendications 1 à 3, caractérisé par le fait que, dans le cas de l'utilisation d'un module de réseau de connexion numérique (MTS) en tant qu'unité partielle de l'unité de commande centrale (CCU), pour une taille correspondante de l'installation, toutes les arrivées de lignes indiquées sont disponibles, après le retrait des connecteurs (V1 à V11), immédiatement pour la connexion aux entrées ou sorties correspondantes du module de réseau de connexion (MTS) de la même manière que les connexions de lignes à structure MIC du module d'interface associé à l'unité de commande centrale (CCU), et les connexions du module de conférence (Con).

5. Dispositif suivant la revendication 1, caractérisé par le fait que les arrivées de lignes (RHW0, THW0; RHW10 à RHW12, THW10 à THW12) sont présentes d'une manière générale indépendamment de la taille effective existante du montage, suivant le montage d'ensemble prévu au maximum.
